# EUROPÄISCHE PATENTSCHRIFT

(11) **EP 2 353 979 B1**
(45) Veröffentlichungstag und Bekanntmachung des Hinweises auf die Patenterteilung: **22.05.2013**
(21) Anmeldenummer: 11150071.6
(22) Anmeldetag: 04.01.2011
(51) Int. Cl.: B62H 3/02, E05B 73/02, G07F 17/08, G07F 17/10

(54) **Andockstation für Leihobjekte, Leihobjekt und Pfandsystem**
Docking station for rental items, rental item and deposit system
Station d'amarrage pour objets de location, objet de location et système de consigne

(30) Priorität: 19.01.2010 EP 10151118
(43) Veröffentlichungstag der Anmeldung: 10.08.2011
(73) Patentinhaber: Sunlounger.ch GmbH, 8185 Winkel (CH)
(72) Erfinder: Fässler, Daniel, 8308 Illnau (CH)
(74) Vertreter: Fischer, Michael

(56) Entgegenhaltungen:
- EP-A1- 2 315 192
- EP-A2- 1 371 310
- EP-A2- 1 898 371
- WO-A1-2005/091234
- DE-A1- 4 242 005
- DE-A1-102005 013 738
- GB-A- 2 265 346

## Beschreibung

Die vorliegende Erfindung bezieht sich auf eine Andockstation für Leihobjekte, insbesondere Outdoor-Möbel, wie Liegestühle, Gartenstühle, Tische oder Sonnenschirme.

Im Touristikbereich und im Einzel- und Grosshandel ist es schon seit längerem bekannt, Leihobjekte, wie zum Beispiel Roll-, Einkaufswagen und Fahrräder, unter Einsatz eines Pfandes von Andockstationen zum temporären Gebrauch entnehmen zu können. Auf diese Weise können dem Benutzer die Leihobjekte entgeltlos oder zu einem günstigen Tarif zur Verfügung gestellt werden, da der Einsatz des Pfandes ein Anreiz dafür ist, das Leihobjekt nach Gebrauch wieder in die Andockstation unter Rückerstattung des Pfandes einzusetzen.

Eine derartige Andockstation ist beispielsweise aus der europäischen Patentanmeldung EP 1 898 371 A2, die hierdurch per Referenz eingegliedert gilt, bekannt. Dort wird eine Andockstation offenbart, an welcher Leihobjekte, wie Outdoor-Möbel, insbesondere Liegestühle, Gartenstühle, Tische und Sonnenschirme, mittels eines Pfandschloss-Schlüsselelement-Paares gegen ein Pfand entnommen und nach Gebrauch unter Rückgabe des Pfandes wieder zentral gelagert werden können. Die Andockstation ist dabei als jochförmiges oder gewölbtes Rahmengestell oder mit säulenförmiger Gestalt ausgeführt und umfasst mehrere Pfandschlösser, die in einer vertikalen Reihe angeordnet sind, damit die Leihobjekte übereinander stapelbar von mehreren Seiten in verschiedenen Ausrichtungen abgestellt und mit der Andockstation verbindbar sind. Eine weitere gattungsgemässe Andockstation ist auch in der deutschen Patentanmeldung DE 42 42 005 A1 offenbart.

Leider besteht hierbei neben dem vergleichsweise grossen Platzbedarf der Nachteil, dass ein Benutzer im Grunde genommen die Leihobjekte nach dem Last-In-First-Out-Prinzip entnehmen muss. Kommt es beispielsweise aufgrund von Vandalismus zu einer Beschädigung des obersten Leihobjekts, wie z.B. das Aufschneiden der Stoffbespannung eines Liegestuhls, müsste der Benutzer so viele Pfandstück einsetzen, bis der Stapel bis zu einem ordnungsgemässen Leihobjekt abgetragen ist. Analog gilt dies beispielsweise auch für durch Blütenstaub, Regen und dergleichen verschmutzte bzw. durchnässte bzw. sonst wie unbrauchbare Leihobjekte.

Der vorliegenden Erfindung liegt daher die Aufgabe zugrunde, eine Andockstation für Leihobjekte anzugeben, die es ermöglicht, ein bestimmtes, aber beliebiges Leihobjekt aus einer Andockstation entnehmen zu können und gleichzeitig die Leihobjekte in einer raumsparenden Weise in der Andockstation zu lagern.

Diese Aufgabe wird erfindungsgemäss durch eine Andockstation für Leihobjekte, insbesondere Outdoor-Möbel, wie Liegestühle, Gartenstühle, Tische oder Sonnenschirme, gelöst, umfassend:
a) einem Rahmen, der in hintereinander versetztem Verlauf angeordnete Aufnahmeelemente für eine das Gewicht der Leihobjekte zumindest teilweise abstützende Aufnahme der Leihobjekte aufweist; und
b) einer Anzahl von Pfandschlössern oder Schlüsselelementen, mittels denen die Leihobjekte durch Eingabe eines Pfandes aus dem Rahmen entnehmbar und nach deren Rückgabe unter Rückgabe des Pfandes verriegelbar in dem Rahmen gehalten sind,
c) der Rahmen zwei sich gegenüberliegend angeordnete, mit waagrechten Komponenten verlaufende Rahmenteile aufweist, an denen die Aufnahmeelemente sich jeweils paarweise gegenüberliegend angeordnet sind, wobei je ein Aufnahmelement der paarweise angeordneten Aufnahmeelemente auf dem einen Rahmenteil und das andere Aufnahmelement auf dem anderen Rahmenteil angeordnet ist, und ein Leihobjekt von je einem Paar von gegenüberliegenden Aufnahmeelementen aufgenommen ist.

Somit ergibt sich eine Andockstation, aus der die Leihobjekte in einer beliebigen Reihenfolge entnehmbar und einstellbar sind, wobei die Aufnahmeelemente eine bis vollständig frei hängende Lagerung der Leihobjekte ermöglichen. Dabei können die Leihobjekte mit ihrem vollen Gewicht auf den Aufnahmeelementen gelagert sein. Ebenso wäre es zur Entlastung des Rahmens denkbar, die Leihobjekt etwa federbeaufschlagt am Boden in einem Einführelement zu halten und an dem Rahmen nur noch quasi gewichtsfrei mittels des Pfandschlosses oder des Schlüsselelements in Position zu halten.

Weiter ist erfindungsgemäss ein Pfandsystem vorgesehen, das eine vorstehend genannte Andockstation und mindestens ein Leihobjekt der vorstehend genannten Art umfasst.

Um die Leihobjekte in einfacher Weise in dem Rahmen einhängen zu können, weist der Rahmen erfindungsgemäss zwei sich gegenüberliegend angeordnete, mit waagrechter Komponente verlaufende Rahmenteile aufweisen, an denen die Aufnahmeelemente sich jeweils paarweise gegenüberliegend angeordnet sind. Dabei ist mit der waagrechten Komponente verlaufend gemeint, dass die Rahmenteile nicht zwingend exakt waagrecht verlaufen müssen, sondern auch (leicht) ansteigend oder abfallend verlaufen können. Da jedenfalls ein paralleler Verlauf der Rahmenteile zueinander vorgesehen ist, müssen sich die beiden Aufnahmeelemente eines Paares aber auch nicht zwingend so gegenüberstehen, dass eine gedachte Verbindungslinie der beiden Aufnahmeelemente eines Paares senkrecht zu den Rahmenteilen verläuft.

Es kann aber für ein einfaches Einstellen und eine einfache Entnahme vorteilhaft sein, wenn die Rahmenteile im wesentlichen waagrecht höhengleich angeordnet verlaufen. Eine diesbezüglich besonders bevorzugte Lösung ergibt sich allerdings, wenn die Aufnahmeelemente so angeordnet sind, dass die Leihobjekte auf ihnen ruhend im wesentlichen senkrecht hängend angeordnet sind, wobei eine gedachte Verbindungslinie eines Paares von Aufnahmeelementen senkrecht zur Orientierung der beiden Rahmenteile verläuft.

Eine konstruktiv einfache und platzsparende Lösung hinsichtlich der Lagerung und Arretierung der Leihobjekte ergibt sich, wenn an einem Rahmenteil die Aufnahmeelemente und Pfandschlösser oder Schlüsselelemente, vorzugsweise ineinander integriert, angeordnet sind. Bei einer integrierten Ausgestaltung kann jedes Pfandschloss als Bügelschloss ausgeführt sein. Damit würde sich die benutzerfreundliche Option ergeben können, dass das Bügelschloss mit dem Einführen des Pfandes öffnend aufspringt und/oder mit dem Einführen des Leihobjekts in das Aufnahmeelement unter Rückgabe des Pfandes schliessend einrastet. Selbstverständlich kann das Bügelschloss aber auch mit einem Schlüssel öffen- und verschliessbar sein, wobei der Schlüssel selbst das Pfand darstellen kann.

Typischerweise kann das Pfand eine Münze, Wertmarke, ein Kunststoffchip oder eine Chipkarte sein.

Eine weitere vorteilhafte Ausgestaltung der Erfindung kann es auch vorsehen, dass die Schlüsselelemente oder Pfandschlösser mittels eines Verbindungselements am Rahmen befestigt sind.

Grundsätzlich wäre aber auch eine Alternative denkbar, bei der Leihobjekte in den Aufnahmeelementen wie vorstehend erläutert gehalten sind, aber die Befestigung ähnlich wie bei bekannten Einkaufswagen von Leihobjekt zu Leihobjekt vorgesehen ist. Nur das erste Leihobjekt wäre dann mit der Andockstation verbunden. In diesem Fall wären je ein Pfandschloss und je ein Schlüsselelement an dem Leihobjekt angeordnet. Eine Entnahme wäre dann nach dem Last-In-First-Out-Prinzip vorgesehen.

Bevorzugte Ausführungsbeispiele der vorliegenden Erfindung werden anhand einer Zeichnung näher erläutert. Dabei zeigen:
- Fig. 1: in schematischer Ansicht ein erstes System aus Andockstation ohne Werbetafel (a) und mit Werbetafel (b) und darin eingehängten Liegestühlen;
- Fig. 2: in schematischer Ansicht ein zweites System aus Andockstation als Einfach- oder als Doppelstation (a) bzw. (b) mit Werbetafel und eingehängten Liegestühlen; und
- Fig. 3: in schematischer Ansicht ein drittes System aus Andockstation als überdachte Einfachstation eingehängten Liegestühlen.

Die Figur 1(a) zeigt in seitlicher perspektivischer Ansicht ein erstes System 2, umfassend eine Andockstation 4 mit entsprechend eingehängten Liegestühlen 6. Die Andockstation 4 kann grundsätzlich aber für die Aufnahme von Leihobjekten aller Art, insbesondere Outdoor-Möbeln, wie Liegestühle, Gartenstühle, Tische oder Sonnenschirme, genutzt werden. Die Andockstation 4 verfügt in Figur 1 über einen Rundstahlrahmen 8. Entlang eines waagrechten Teils 8a des Rundstahlrahmens 8 sind in hintereinander versetztem Verlauf Aufnahmeelemente 10 für die Liegestühle 6 angeordnet. Die Aufnahmeelemente 10 werden dabei hier nicht durch eine Einkerbung in dem Rundstahlrahmen 8 erzielt, sondern durch auf den Rundstahlrahmen 8 aufgeschweisste Metallbügel 12, die die Liegestühle in ihrer "Parkposition" beabstanden. Auf diese Weise können die Liegestühle 6 in senkrechter Ausrichtung mit an ihrem Rahmen 14 angebrachten Zapfen 16 voll hängend in den Aufnahmeelementen 10 auf dem Rundstahlrahmen 8 eingehängt werden. Natürlich wären auch noch Einführhilfen, wie seitliche Schienenführungen, realisierbar, so dass beispielsweise bei einem federbelasteten Abschluss der Einführhilfen nur ein Teil des Gewichts der Liegestühle auf dem Rundstahlrahmen 8 lagern würde.

Weiter weist der waagrechte Teil 8a des Rundstahlrahmens 8 auf der in der zeichnerischen Ansicht linken Seite Pfandschlösser 18 auf, mittels denen die Liegestühle 6 durch Eingabe eines Pfandes, wie z.B. einer Münze, aus dem Rundstahlrahmen 8 entnehmbar und nach deren Rückgabe unter Rückgabe des Pfandes verriegelbar in dem Rundstahlrahmen 8 gehalten sind. Dabei ist das Pfandschloss 18 hier schwenkbar ausgeführt, so dass es nach dem Einführen einer Münze durch eine Schwenkbewegung um nahezu 90° (vg1. Pfeil 20 in (b)) den zuvor gesperrten Zapfen 16 des Liegestuhls 6 freigibt. Bei der Rückgabe des Liegestuhls 6 kann das Pfandschloss 18 nach dem korrekten Auflagern des Zapfens 16 in entgegensetzter Richtung zurückgeschwenkt werden, wobei die Münze wieder freigegeben wird und der Zapfen 16 aber gegen Entnahme arretiert ist. Zur Vermeidung von missbräulicher Entnahme des Pfandes kann beispielsweise eine Vertiefung im Zapfen 16 vorgesehen sein, die mit einer gegengleichen Backe am Pfandschloss 18 in Übereinstimmung gebracht werden muss, damit das Pfandschloss 18 zurückgeschwenkt werden kann. Eine blosse Stange mit dem Durchmesser des Zapfens 16 kann somit nicht zum Erschleichen der Pfandmünze eingesetzt werden.

Figur 1 (b) zeigt das System 2 mit einer zusätzlichen rückwärtig angeordneten Werbetafel 22. Damit können durch Aufdrucke auf die hier nicht weiter dargestellte Bespannung der Liegestühle 6 und entsprechende Werbetafeln 22 auch noch Werbebotschaften transportiert werden.

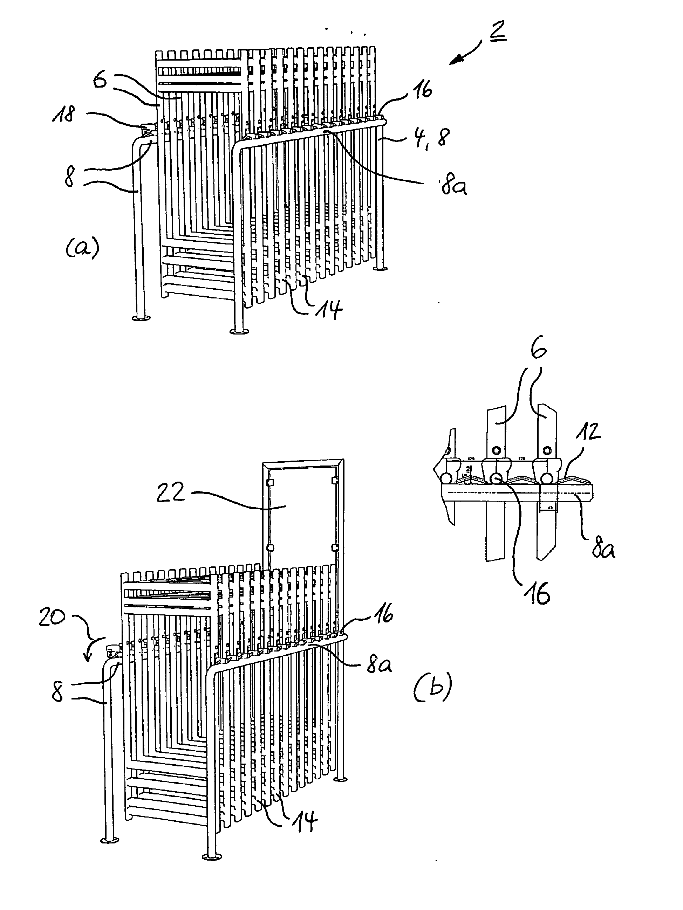

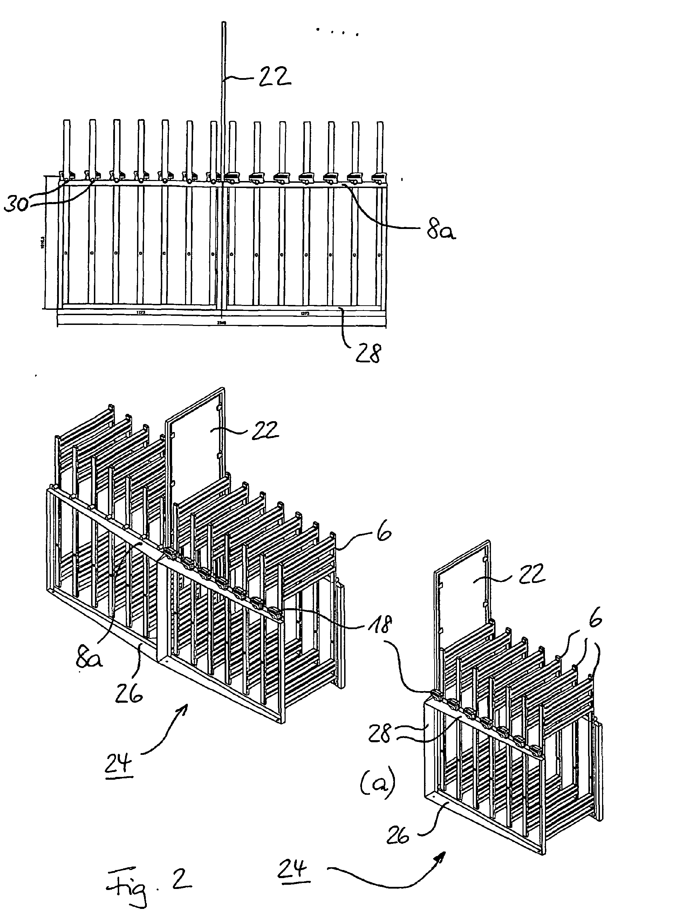

Die Figur 2 zeigt in schematischer Ansicht ein zweites System 24 aus Andockstation 26 als Einfach- oder als Doppelstation (a) bzw. (b) mit Werbetafel 22 und eingehängten Liegestühlen 6. Hier vorliegend ist ein Rahmen 28 aus Profilstahl vorgesehen, in dem Kerben 30 eingearbeitet sind, die als Aufnahmeelemente 10 für die Zapfen 16 der Liegestühle 6 dienen. Die Pfandschlösser 18 können hier als direkt mit den Kerben 30 zusammenwirkende Bügelschlösser ausgestaltet sein. Typischerweise springt ein solches Bügelschloss mit dem Einführen des Pfandes öffnend auf und/oder rastet mit dem Einführen des Zapfens 16 des Liegestuhls in die Kerbe 30 unter Rückgabe der Pfandmünze schliessend ein. Natürlich könnte es auch vorgesehen sein, die Pfandschlösser so auszuführen, dass die Liegestühle 6 mittels eines an einer Kette angeordneten Schlüsselelements an der Andockstation 26 befestigt sind. Der hier gewählte Aufbau des Pfandschlosses 18 verfügt jedoch nicht über eine Kette mit Schlüsselelement, sondern ist als Bügelschloss ausgeführt.

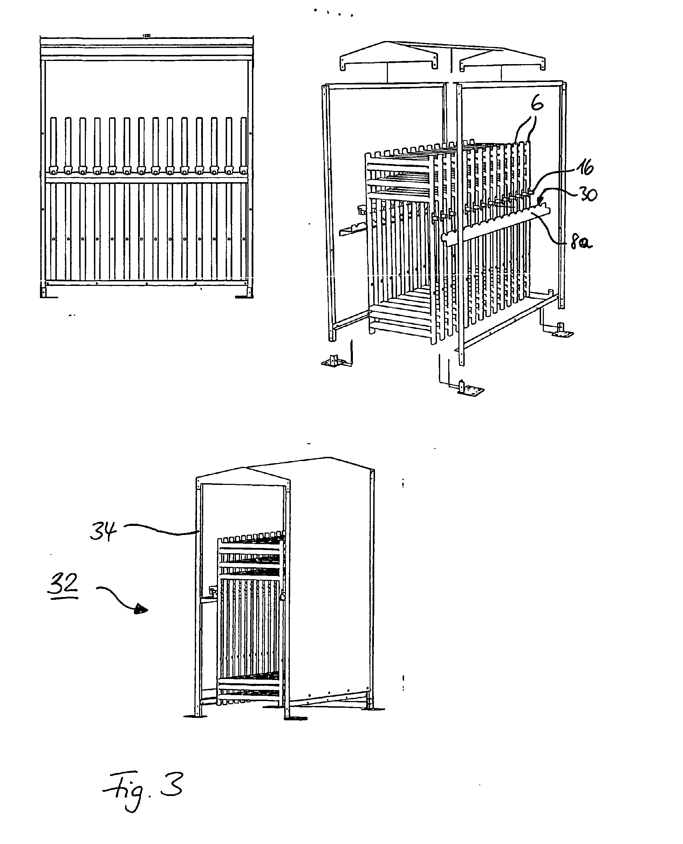

Die Figur 3 zeigt nun in schematischer Ansicht ein drittes System aus Andockstation als überdachte Einfachstation 34 eingehängten Liegestühlen 6. Auch hier wurde wieder auf die vorstehend genannten Bauteile zurückgegriffen. Im waagrechten Rahmenteil 8a sind in der Explosionsdarstellung sehr schön die seitlich angebrachten Kerben 30 zu sehen.

## Patentansprüche

1. Andockstation (4, 26, 34) für Leihobjekte (6), insbesondere Outdoor-Möbel, wie Liegestühle, Gartenstühle, Tische oder Sonnenschirme, mit:
a) einem Rahmen (8, 8a), der in hintereinander versetztem Verlauf angeordnete Aufnahmeelemente (10, 12, 30) für eine das Gewicht der Leihobjekte (6) zumindest teilweise abstützende Aufnahme der Leihobjekte (6) aufweist; und
b) einer Anzahl von Pfandschlössern (16) oder Schlüsselelementen, mittels denen die Leihobjekte (6) durch Eingabe eines Pfandes aus dem Rahmen (8, 8a) entnehmbar und nach deren Rückgabe unter Rückgabe des Pfandes verriegelbar in dem Rahmen (8, 8a) gehalten sind,
**dadurch gekennzeichnet, dass**
c) der Rahmen (8) zwei sich gegenüberliegend angeordnete, mit waagrechten Komponenten verlaufende Rahmenteile (8a) aufweist, an denen die Aufnahmeelemente (12, 30) sich jeweils paarweise gegenüberliegend angeordnet sind, wobei je ein Aufnahmelement der paarweise angeordneten Aufnahmeelemente auf dem einen Rahmenteil (8a) und das andere Aufnahmelement auf dem anderen Rahmenteil (8a) angeordnet ist, und ein Leihobjekt (6) von je einem Paar von gegenüberliegenden Aufnahmeelementen (12, 30) aufgenommen ist.

2. Andockstation (4, 26, 34) nach Anspruch 1,
**dadurch gekennzeichnet, dass**
die Rahmenteile (8a) im wesentlichen waagrecht höhengleich angeordnet verlaufen.

3. Andockstation (4, 26, 34) nach Anspruch 1 oder 2,
**dadurch gekennzeichnet, dass**
die Aufnahmeelemente (12, 30) so angeordnet sind, dass die Leihobjekte (6) auf ihnen ruhend im wesentlichen senkrecht hängend angeordnet sind, wobei eine gedachte Verbindungslinie eines Paares von Aufnahmeelementen (12, 30) senkrecht zur Orientierung der Rahmenteile (8a) verläuft.

4. Andockstation (4, 26, 34) nach einem der vorangehenden Ansprüche, **dadurch gekennzeichnet, dass**
an einem Rahmenteil (8a) die Aufnahmeelemente (30) und Pfandschlösser (18) oder Schlüsselelemente ineinander integriert angeordnet sind.

5. Andockstation (4, 26, 34) nach Anspruch 4,
**dadurch gekennzeichnet, dass**
die Pfandschlösser (18) als Bügelschlösser ausgeführt sind.

6. Andockstation (4, 26, 34) nach Anspruch 5,
**dadurch gekennzeichnet, dass**
das Bügelschloss mit dem Einführen des Pfandes öffnend aufspringt und mit dem Einführen des Leihobjekts in das Aufnahmeelement unter Rückgabe des Pfandes schliessend einrastet.

7. Andockstation (4, 26, 34) nach einem der vorangehenden Ansprüche,
**dadurch gekennzeichnet, dass**
das Pfand eine Münze, Wertmarke, ein Kunststoffchip oder eine Chipkarte ist.

8. Andockstation (4, 26, 34) nach einem der vorangehenden Ansprüche,
**dadurch gekennzeichnet, dass**
die Schlüsselelemente oder Pfandschlösser mittels eines Verbindungselements am Rahmen befestigt sind.

## Claims

1. Docking station (4, 26, 34) for rental items (6), in particular outdoor furniture, such as sun loungers, garden chairs, tables or parasols, with:
a) a frame (8, 8a), which has supporting elements (10, 12, 30) arranged one behind the other for a rack for rental items (6) that at least partially supports the weight of the rental items (6); and
b) a quantity of deposit locks (16) or key elements, by means of which the rental items (6) can be removed from the frame (8, 8a) by inserting a deposit and, upon being returned, can be locked into the frame (8, 8a) with the deposit being returned,
**characterised in that**
c) the frame (8) has two frame parts (8a) arranged opposite one another and running with horizontal components, on which frame parts (8a) the supporting elements (12, 30) are arranged in opposing pairs, wherein one supporting element in each pair of supporting elements is arranged on one of the frame parts (8a) and the other supporting element is arranged on the other frame part (8a), and a rental item (6) is held by one pair of opposing supporting elements (12, 30) in each case.

2. Docking station (4, 26, 34) according to claim 1,
**characterised in that**
the frame parts (8a) essentially run horizontally arranged at the same height.

3. Docking station (4, 26, 34) according to claim 1 or 2,
**characterised in that**
the supporting elements (12, 30) are arranged so that the rental items (6) resting on them are essentially arranged in a vertically suspended position, wherein an imaginary line connecting a pair of supporting elements (12, 30) runs perpendicular to the orientation of the frame parts (8a).

4. Docking station (4, 26, 34) according to one of the preceding claims, **characterised in that**
the supporting elements (30) and deposit locks (18) or key elements are arranged on a frame part (8a) such that they are integrated into one another.

5. Docking station (4, 26, 34) according to claim 4,
**characterised in that**
the deposit locks (18) are implemented as U-locks.

6. Docking station (4, 26, 34) according to claim 5,
**characterised in that**
the U-lock springs open when the deposit is inserted and/or locks when the rental item is inserted into the supporting element with return of the deposit.

7. Docking station (4, 26, 34) according to one of the preceding claims,
**characterised in that**
the deposit is a coin, token, plastic chip or chip card.

8. Docking station (4, 26, 34) according to one of the preceding claims,
**characterised in that**
the key elements or deposit locks are fastened to the frame by means of a connecting element.

## Revendications

1. Poste ( 4, 26, 34 ) d'arrimage pour des objets ( 6 ) de location, notamment des meubles d'extérieur, comme des chaises longues, des chaises de jardin, des tables et des parasols, comprenant :
a) un bâti ( 8, 8a ) qui a des éléments ( 10, 12, 30 ) de réception disposés les uns derrière les autres d'une manière décalée pour une réception des objets ( 6 ) de location en en soutenant au moins en partie le poids ; et
b) un certain nombre de serrures ( 16 ) de consigne ou d'éléments de fermeture, au moyen desquels les objets ( 6 ) de location peuvent être retirés du bâti ( 8, 8a ) en introduisant une consigne et, après leur restitution avec restitution de la consigne, être maintenus, avec possibilité de verrouillage, dans le bâti ( 8, 8a ), **caractérisé en ce que**
c) le bâti a deux parties ( 8a ) de bâti, qui sont disposées de manière opposée, qui s'étendent en ayant des éléments horizontaux et sur lesquelles les éléments ( 12, 30 ) de réception sont disposés de manière opposée respectivement par paire, respectivement un élément de réception des éléments de réception disposés par paire étant disposé sur l'une des parties ( 8a ) du bâti et l'autre élément de réception sur l'autre partie ( 8a ) du bâti et un objet ( 6 ) de location étant reçu par une paire d'éléments ( 1, 30 ) de réception opposés.

2. Poste ( 4, 26, 34 ) d'arrimage suivant la revendication 1,
**caractérisé en ce que**
les parties ( 8a ) du bâti s'étendent en étant disposées sensiblement horizontalement au même niveau.

3. Poste ( 4, 26, 34 ) d'arrimage suivant la revendication 1 ou 2, **caractérisé en ce que**
les éléments ( 12, 30 ) de réception sont disposés de manière à ce que les objets ( 6 ) de location y reposent en étant suspendus sensiblement verticalement, une ligne imaginaire de liaison d'une paire d'éléments ( 12, 30 ) de réception s'étendant perpendiculairement à l'orientation des parties ( 8a ) du bâti.

4. Poste ( 4, 26, 34 ) d'arrimage suivant l'une des revendications précédentes, **caractérisé en ce que**
sur une partie ( 8a ) du bâti, les éléments ( 30 ) de réception et les serrures ( 18 ) de consigne ou les éléments de fermeture sont intégrés les uns dans les autres.

5. Poste ( 4, 26, 34 ) d'arrimage suivant la revendication 4,
**caractérisé en ce que**
les serrures ( 18 ) de consigne sont réalisées sous la forme de cadenas.

6. Poste ( 4, 26, 34 ) d'arrimage suivant la revendication 5,
**caractérisé en ce que**
les cadenas sautent en s'ouvrant par l'introduction de la consigne et s'encliquètent en se fermant avec restitution de la consigne par l'introduction de l'objet de location dans l'élément de réception.

7. Poste ( 4, 26, 34 ) d'arrimage suivant l'une des revendications précédentes,
**caractérisé en ce que**
la consigne est une pièce, un billet, une pastille en matière plastique ou une carte à puce.

8. Poste ( 4, 26, 34 ) d'arrimage suivant l'une des revendications précédentes,
**caractérisé en ce que**
les éléments de fermeture ou les serrures de consigne sont fixés au bâti au moyen d'un élément de liaison.
